Europäisches Patentamt

European Patent Office

Office européen des brevets

(19)

(11) Publication number: 0 274 748
A2

# (12) EUROPEAN PATENT APPLICATION

(21) Application number: 87119315.7

(22) Date of filing: 29.12.87

(51) Int. Cl.4: C08L 23/08 , C08L 29/04 , B32B 27/00

(30) Priority: 30.12.86 JP 310773/86

(43) Date of publication of application:
20.07.88 Bulletin 88/29

(84) Designated Contracting States:
BE DE FR GB IT NL SE

(71) Applicant: KURARAY Co. LTD.
1621 Sakazu Kurashiki-shi
Okayama 710(JP)

(72) Inventor: Negi, Taichi
131-1, Yasue
Kurashiki-City(JP)
Inventor: Tanaka, Nobuo
11-23, Shishigaguchi-Cho
Nishinomiya-City(JP)
Inventor: Yonezu, Kiyoshi
1652, Sakazu
Kurashiki-City(JP)

(74) Representative: Vossius & Partner
Siebertstrasse 4 P.O. Box 86 07 67
D-8000 München 86(DE)

(54) Resin compositions and their use for preparing shaped articles.

(57) Described are resin compositions containing a saponified product of a modified ethylene-vinyl acetate copolymer containing 0.1 to 10 mole percent of pyrrolidone ring containing units and shaped articles prepared from this composition, especially a multilayered structure formed by a high speed thermal drawing, having excellent uniform gas barrier properties without pinholes, cracks and localized uneven stretching.

EP 0 274 748 A2

## RESIN COMPOSITIONS AND THEIR USE FOR PREPARING SHAPED ARTICLES

This invention relates to resin compositions on the basis of saponified ethylene-vinyl acetate copolymers which exhibit superior thermo-drawability without formation of pinholes, cracks, localized uneven stretching and the like, and superior gas barrier properties. This invention further relates to shaped articles, especially multilayered structures utilizing these resin compositions.

Effectiveness of saponified ethylene-vinyl acetate copolymers (EVOH) has been recognized in the field of wrapping films e.g.for foodstuffs requiring barrier properties against oxygen, and other products requiring retention of flavor. However, films composed of EVOH alone are inadequate both in toughness and in barrier properties against water and moisture.

In order to attempt to overcome these inadequacies, EVOH has been used in the form of a multilayered structure obtained by laminating it with a thermoplastic resin such as polypropylene, polystyrene, etc. and various heat sealant layers represented by ionomers, ethylene-vinyl acetate copolymers, etc.

In the case where multilayered structures (e.g. films, sheets, parisons or other preforms) prepared by various methods are worked or fabricated into containers for example, particularly in the case where drawing is performed at a temperature lower than the melting point of EVOH, small voids, cracks and localized uneven stretchings are often formed in the EVOH layer so that the oxygen barrier properties of a container so formed are seriously impaired. In addition, the container does not exhibit an esthetic appearance. Accordingly, under these circumstances, such multilayered structures cannot be used for the production of containers for foodstuffs, etc.

In an attempt to prevent the formation of pinholes and cracks in the EVOH layer during thermal drawing, various plasticizers were incorporated into EVOH (Published Unexamined Japanese Patent Application Nos. 88067/78 and 20345/84), or polyamide resins were blended with EVOH (Published Unexamined Japanese Patent Application Nos. 141785/77 and 154755/83, 36412/83). In any case, however, satisfactory results were not obtained. In order to improve the thermal drawing properties of EVOH using plasticizers represented by those containing hydroxyl groups and of the aromatic sulfonamide type, it is necessary to incorporate 10 to 20 parts by weight of plasticizer per 100 parts by weight of EVOH. In such case, many problems result, such as reduction in gas barrier properties, reduction in the adhesion strength of the EVOH layer to other resin layers perhaps due to bleeding of the plasticizer. Therefore, such a system is inadequate.

Methods comprising blending polyamide resins with EVOH to impart flexibility thereto and improve fabrication properties are known; see e.g. Published Examined Japanese Patent Application Nos. 24277/69 and 24813/85, Published Unexamined Japanese Patent Application No. 129035/83, Published Examined Japanese Patent Application No. 38897/84, Published Unexamined Japanese Patent Application No. 36412/83. However, the use of polyamides, which may improve thermal draw formability at a high speed, produces formed articles in which gel-like substances are present, perhaps due to a rapid chemical reaction with EVOH. Also, due to marked coloration, the polyamides have generally been found unsatisfactory for use. A patent application directed to the system of blending a polyamide resin causing relatively less formation of gel and less coloration and EVOH has been filed. Although it was to be expected that thermal drawing at a low speed would produce well-formed articles free from cracks, pinholes and uneven stretching, the system produces, as observed by measurement of the gas barrier properties, extremely varying data, probably due to insufficient compatibility with EVOH. It is suspected that the presence of minute pinholes that are hardly discernible by the naked eye are responsible for this. Furthermore, with the speed up of a thermal drawing machine, the variation in the measurement data of gas barrier properties is greatly increased. The variation in data has resulted in reducing the reliability of these containers as regards good gas barrier properties.

The recent requirements for prolonged preservation periods of packaged food demands a higher performance of packaging material in gas barrier properties. Increasing the thickness of the EVOH layer to meet these requirements tends to produce very small pinholes, cracks and localized uneven stretching as compared with the case of a rather thin EVOH layer in thermal drawing. Furthermore it increases the variation of observed values of gas barrier properties and decreases the reliability as gas barrier container.

There is a tendency to blend thermoplastic resin scrap, such as trimming, defect containers and the like with the thermoplastic resins in order to decrease product costs. In this case, however, the thermoplastic resin layer blended with the recovered thermoplastic resins tends to have localized uneven stretching and cracks and to have poor appearance.

The development of EVOH with excellent forming (shaping) characteristics, giving superior gas barrier properties and highly reliable gas barrier containers (with less varied values in gas barrier properties) without pinholes, cracks and localized uneven stretching at high speed thermal drawing is highly desirable.

EVOH resins have many superior characteristics as mentioned above, but they also have some disadvantages, in that they are for example liable to produce cracks, very small pinholes and localized uneven stretching during processing of a laminate structure with a thermoplastic resin to form containers. These containers have unsatisfactory gas barrier properties. The appearance is also impaired and the containers cannot be used for the packaging of food. The technical problem underlying the present invention is to provide EVOH resin compositions which maintain the excellent gas barrier properties of EVOH and which are useful for preparing shaped articles, especially multilayered structures without producing cracks, pinholes and localized uneven stretching.

This problem is solved by a resin composition comprising 95 to 30 parts by weight of a saponified ethylene-vinyl acetate copolymer (referred to as EVOH(A) hereinafter) containing ethylene units in an amount of 20 to 55 mole percent and having a degree of saponification of the vinyl acetate component of at least 90 mole percent, and 5 to 70 parts by weight of a saponified modified ethylene-vinyl acetate copolymer (referred to as EVOH(B) hereinafter) containing units with a pyrrolidone ring in an amount of 0.1 to 10 mole percent, and ethylene units in an amount of 20 to 55 mole percent and having a degree of saponification of the vinyl acetate component of at least 90 mole percent. The invention furthermore relates to multilayered structures composed of a layer made of this resin composition with a thermoplastic resin layer on at least one side, particularly a thermal drawn, more particularly a high speed thermal drawn multilayered structure.

EVOH(A) and EVOH(B) used in this invention contain ethylene units in an amount of 20 to 55 mole percent, preferably 25 to 50 mole percent, and have a degree of saponification of at least 90 mole percent, preferably at least 96 mole percent. With less than 20 mole percent of ethylene units, the formability of the resin becomes difficult because the formation temperature approaches the decomposition temperature. With more than 55 mole percent of ethylene units, the gas barrier properties of shaped articles decreases and multiple layer structure containers exhibit inferior gas barrier properties. With less than 96 mole percent, especially less than 90 mole percent of vinyl acetate units in the degree of saponification, the EVOH resin can be formed into containers having a limited number of cracks and pinholes, but the resin exhibits inferior gas barrier properties. Furthermore, EVOH(A) and EVOH(B) should have a melt index (determined according to ASTM D 1238-65T at 190°C under a load of 2160 g) of 0.1 to 25 g/10 minutes, preferably 0.3 to 20 g/10 minutes.

EVOH(B) should contain units with a pyrrolidone ring in an amount of 0.1 to 10 mole percent, preferably 0.1 to 5 mole percent. With less than 0.1 mole percent of pyrrolidone ring-containing units, the resin does not provide good-looking shaped articles free from cracks and localized uneven stretching on account of its insufficient improvement in drawability in the blend with EVOH-(A). With more than 10 mole percent of pyrrolidone ring-containing units, the resin shows poor thermal stability and is liable to gelation at the time of melt forming. In addition, it has poor water resistance and moisture resistance, which leads to poor gas barrier properties in an atmosphere of high humidity. A suitable pyrrolidone ring-containing monomer is N-vinyl-2-pyrrolidone or a derivative thereof, the former being preferred. EVOH(B) is obtained by saponification of the copolymer obtained by copolymerization of ethylene with vinyl acetate and a pyrrolidone ring-containing monomer.

The weight ratio of EVOH(A) and EVOH(B) (referred to as the ratio (A/B) hereinafter) in the resin composition is 95:5 to 30:70, preferably 95:5 to 55:45. With a ratio (A/B) of more than 95:5, the resin composition tends to produce cracks, pinholes, and localized uneven stretching during the formation of containers, and undesired results in a broad variation of the values of the gas barrier properties. With a ratio (A/B) of less than 30:70, it is difficult to obtain films with even thickness, especially in the case of coextruded films.

In this invention, EVOH(A) and EVOH(B) have ethylene units of more than 5 mole percent difference and preferably satisfy the following equations.

$$E'(B) \leq 10^9 \text{ dyn./cm}^2 \qquad (I)$$
$$1.0 \leq E'(A)/E'(B) \qquad (II)$$
$$|SP(A) - SP(B)| \geq 0.1 \qquad (III)$$
$$0.05 \leq MI(A)/MI(B) \leq 20 \qquad (IV)$$

wherein:

$E'(A)$ is the dynamic viscoelasticity of EVOH(A) in $\text{dyn/cm}^2$ at the thermal drawing formation temperature,

$E'(B)$ is the dynamic viscoelasticity of EVOH(B) in $\text{dyn/cm}^2$ at the thermal drawing formation temperature,

$SP(A)$ is the solubility parameter of EVOH(A) (as determined by the method of Small),

$SP(B)$ is the solubility parameter of EVOH(B) (as determined by the method of Small).

With less than 5 mole percent difference of EVOH(A) and EVOH(B) ethylene units, with more than 20 or less than 0.05 of the melt index ratio of EVOH(A) to EVOH(B) MI(A)/MI(B), or with. less than 0.1 of solubility parameter difference of EVOH(A) and EVOH(B) | SP(A) - SP(B) |, the resin composition tends to produce cracks and pinholes during the formation of containers, and results in a broad variation of the value of gas barrier properties, presumably because of an uneven dispersion of the blend of EVOH(A) and EVOH(B). With more than $10^9$ dyn/cm$^2$ of dynamic viscoelasticity of EVOH(B) at thermal drawing formation temperature E'(B), or with less than 1.0 of the ratio of dynamic viscoelasticity of EVOH(A) to EVOH(B) at thermal drawing formation temperature E'(A)/E'(B), there is a tendency that drawing during container formation becomes uneven.

The blending process of EVOH(A) with EVOH-(B) is not specifically limited. Preferred processes include dry blending of EVOH(A) with EVOH(B), pelletizing and drying it in a Bunburry mixer or a single-screw or twin-screw extruder. When the blend is heterogeneous or gel and hard spots occur or contaminate during the blending operation, it is highly likely that breakage of the EVOH blend layer and unevenness might often occur during thermal drawing. Therefore, it is desired that an extruder having a higher kneading degree be used, the opening of the hopper be sealed with N$_2$ and the extrusion be performed at low temperatures.

Additionally, during mixing of EVOH(A) with EVOH(B), other additives (various resins, antioxidants, plasticizers, coloring agents, etc.) may be added within a range which does not impair the essential properties of the resin composition of the present invention. For purposes of stabilizing the resin composition against heat and preventing the formation of gel, it is particularly advantageous to incorporate 0.01 to 1 wt% of a hydrotalcite type compound, a sterically hindered phenol or a sterically hindered amine type stabilizer.

Although the resin composition (EVOH composition) of this invention can be formed into films, sheets, tubes, bottles and the like by conventional melt forming and compression forming processes, this composition can exhibit its features most effectively when used as one layer of a multilayered structure. Further details will be described in the following.

Examples of the thermoplastic resins to be used in the multilayered structures of this invention which can be formed under drawing conditions in the following temperature range include polypropylene, saturated polyesters, polystyrene, polyamides, and polyvinyl chloride. Preferred are propylene polymers, in particular propylene homopolymers, ethylene-propylene block copolymers and ethylene-propylene random copolymers, styrene polymers, in particular styrene homopolymers and high impact polystyrene, and saturated polyesters.

When the melting point of the EVOH composition and the temperature of the thermoplastic resin during thermal drawing are designated as X°C and Y°C respectively, the following equation must be satisfied:

X - 10°C ≧ Y ≧ X - 110°C.

If the value of Y is higher than (X-10)°C, the resin composition can be shaped (formed) without any particular additives because the resin composition softens and melts at a temperature in this range. On the other hand, if the value of Y is lower than (X-110)°C, the glass transition temperature (Tg) of the thermoplastic resin is below room temperature. Thus, formed articles show dimensional instability at room temperature.

The process for preparing multilayered structures of this invention comprises making a laminate of the resin composition (i.e. the EVOH composition) with another thermoplastic resin using an adhesive resin, e.g. by extrusion lamination, dry lamination, coextrusion lamination, coextrusion sheet formation (feed block or multiple manifold method), coextrusion pipe formation, coinjection or solution coating, and stretching the obtained heated laminate below the melting point of the thermoplastic resin, e.g. with a vacuum air-pressure deep draw former, or a biaxial stretch blow molder (SPPF formation), thermal drawing of the laminate (sheet or film) with a biaxial stretcher, or by coinjection biaxial stretching of the resin composition with the thermoplastic resin.

The thicker the layer, the more the tensile force of said layer increases. That is, the tensile force ratio of the EVOH composition layer to the thermoplastic resin layer is directly proportional to the thickness ratio thereof. The tensile force ratio of the EVOH composition layer to the thermoplastic resin layer is 5 or less, preferably 1 or less. With a tensile force ratio of the EVOH composition layer to the thermoplastic resin layer of more than 5, the EVOH composition is liable to produce unfavorable cracks and localized uneven stretching. The tensile force of the thermoplastic resin layer in multilayered structures herein described is observed at a tensile rate of 50 mm per minute and a chuck distance of 50 mm, at 100% elongation and at the thermal drawing temperature. The tensile force of EVOH is that of the EVOH(A) EVOH(B) blended layer observed as described above. In case the tensile force of each layer is measured from a drawn multilayered structure, first the state of the draw of the drawn multilayered structure is turned back to the state of before drawing by hot-pressing a drawn multilayered structure, second the structure is separated into the individual layers and last the tensile force of each layer is measured as described above.

The laminate may for example have the following structure:
thermoplastic resin layer/ EVOH composition layer/thermoplastic resin layer, EVOH composition layer/ adhesive resin layer/ thermoplastic resin layer,
thermoplastic resin layer/adhesive resin layer/ EVOH composition layer/ adhesive resin layer/ thermoplastic resin layer. In the case of using a thermoplastic resin layer on both outer sides, the resins may be the same or different.

The adhesive resin as used herein may be any resin which can be drawn, is formable at temperatures below the melting point of the EVOH composition and can adhere the EVOH composition layer to the thermoplastic resin layer. Preferred adhesive resins include polyolefins (e.g., polyethylene, polypropylene), ethylene-vinyl acetate copolymers, ethylene-acrylic acid ester (e.g., methyl ester, ethyl ester) copolymers, etc., having added or grafted thereto ethylenically unsaturated carboxylic acids or anhydrides thereof (e.g., maleic anhydride).

In the present invention, the thermal drawn multilayered structures include containers such as cups and bottles, or sheets or films obtained by thermal drawing, as described above. Furthermore, heating refers to any method for allowing the multilayered structure to stand at temperatures necessary for thermal drawing for a specified period of time and handling the multilayered structure in such a way that it is substantially thermally uniform. A preferred method for heating and making the multilayered structure thermally uniform employs various heaters.

The heating operation may be performed at the same time as the drawing or prior to drawing. The term drawing refers to the operation of forming a uniformly heated multilayered structure into a container, a cup, a sheet or a film by a plug, vacuum air-pressure, by blowing, or a chuck, etc. Either monoaxial drawing and biaxial drawing (simultaneous or sequential) can be used. The draw ratio and drawing rate can be chosen depending on the purpose, but in the present invention, high speed drawing means a method for uniformly forming a container or a film at a drawing rate as high as $5 \times 10^5$ %/min (drawing area magnification/min) but it is not always necessary that the formed product be oriented.

The draw ratio (ratio of original area to final area) should be not more than 70, preferably 3 to 60. With a draw ratio of more than 70, the thermoplastic resin cannot be stretched uniformly, and the multilayered structure becomes poor.

The moisture content of EVOH composition layer, being at least one layer of the multilayered structure, during thermal drawing is not particularly limited, but is preferably in the range of 0.01 to 10 percent.

The recovery of trimming and scrap of defect containers and the like is not particularly limited. The scrap may be recovered by pulverizing, drying when moist, and dryblending with thermoplastic resin; pelletizing and dryblending with thermoplastic resin; pulverizing, dryblending with thermoplastic resin, and pelletizing; and the like. As the blend ratio of scrap to thermoplastic resin of raw material is increased, localized uneven stretching, nonuniformity, cracks, haze and the like are liable to occur. Generally a blend ratio in the range of about 2 to 100 percent is acceptable. In this case additives such as maleic anhydride modified polyolefins, a metal soap, hydrotalcite and the like are preferably added in order to improve the dispersibility and thermal stability, and to prevent unfavorable phenomena during the formation of containers. The high speed thermal drawin multilayered structures obtained have excellent gas barrier properties without pinholes, cracks, and localized uneven stretching. They are suitable for the production of uniform high quality packaging containers for foods, aromaproof containers and the like.

The invention is now described in more detail with reference to the following examples, which are not intended to limit the scope of the invention.

Example 1

EVOH(A) ("EP-E101", a product of Kuraray Co., Ltd.) containing ethylene units in an amount of 32 mole percent and having a saponification degree of 99.6 mole percent, and a melt index (MI(A), at 190°C) of 1.6 g/10 minutes was found to have a solubility parameter SP(A) of 10.6 and a dynamic viscoelasticity E'(A) (at 130°C, 110 Hz) of $7 \times 10^9$ dyn/cm$^2$ observed by a Vibron apparatus (manufactured by Toyo Baldwin Co., Ltd.). EVOH-(B) containing N-vinyl-2-pyrrolidone units in an amount of 2 mole percent and ethylene units in an amount of 44 mole percent, having a saponification degree of 99.6 mole percent, a melt index (MI(B) at 190°C) of 5.5 g/10 minutes was found to have a solubility parameter SP(B) of 9.8 and a dynamic viscoelasticity E'(B) (at 130°C) of $6 \times 10^8$ dyn/cm$^2$. From these data, the difference between SP(A) and SP(B) is 0.8, and the ratio of E'(A) to E'(B) (E'(A)/E'-(B)) is 13. The blend of EVOH(A) and EVOH(B) containing 80 parts by weight of EVOH(A) and 20 parts by weight of EVOH(B) was pelletized by a twin-screw type vented 40 mm extruder heated to 200°C. The hopper opening was sealed with nitrogen gas. The obtained pellets were dried at 80°C for 8 hours. The pellets were introduced into a feed block type coextruder forming 5 layers with 3 extrudates. The structure of the laminate sheet is as follows: two outer layers (800 μm each) made of polystyrene (PS) ("Idemitsu Styrol ET-61", a product of Idemitsu Petrochemical Co., Ltd.), and two 50 μm adhesive layers made of a maleic anhydride-modified ethylene-vinyl acetate copolymer ("Merthene M-5420", a product of Toyo Soda Mfg. Co., Ltd.), for bonding the outer layers to a 50 μm intermediate layer made of the EVOH composition. The tensile force of the polystyrene (PS) layers of this laminate was 1.0 kg/15 mm width at 100% elongation at 130°C, and that of the EVOH layer (50 μm) was 0.3 kg/15 mm width under the same conditions; the tensile force ratio of EVOH layer to PS layer, EVOH/PS becomes 0.3. This sheet was formed by thermal drawing at 130°C by a vacuum air-pressure former (draw rate $9 \times 10^5$ percent (drawing area magnification)-minute, draw ratio 1, stretch ratio 7). The obtained cups were excellent in clarity and appearance without cracks and localized uneven stretching. The gas barrier properties of this cup were excellent at 20°C, 65% RH (measured by the 10/50 type of Mocon Co., Ltd.). The amount of oxygen permeated (ml) through a 20 μm thick layer of the EVOH resin composition per m², 24 hr at atmospheric pressure was 0.7 and its R-value (maximum value - minimun value, when n = 20) was 0.2.

## Comparative Example 1

In Comparative Example 1, the cup was produced in the same manner as in Example 1 using EVOH(B) containing ethylene units in an amount of 44 mole percent, but having a saponification degree of 99.4 mole percent instead. The cup obtained is not acceptable because it has a lot of localized uneven stretchings.

## Example 2

The blend of EVOH(A) and EVOH(B) prepared in the same manner as in Example 1 was formed into a bottle consisting of 3 layers with 2 extrudates, constructing polyester ([η] = 0.7)/blend of EVOH(A) and EVOH(B)/polyester ([η] = 0.7) by a coinjection costretch blow former (Nissei ASB Machine Co., Ltd.). The dynamic viscoelasticity of EVOH(A), E'(A) at 100°C was $9 \times 10^9$ dyn/cm², and that of EVOH(B), E'(B) at 100°C was $9 \times 10^8$ dyn/cm². The tensile force of the polyester layer of a parison (preform) before thermal drawing at 100°C was 3 kg/15 mm width, and that of the EVOH layer was 0.4 kg/15 mm width. The ratio of tensile force of EVOH layer to polyester layer was 0.13. The gas barrier properties of the obtained bottle were excellent. The amount of oxygen permeated (ml) per m².24hr.atm. was 0.5 (layer thickness 20 μm) and R = 0.1 without longitudinal stripes of localized uneven thickness, uneven stretching and cracks.

## Comparative Example 2

In Comparative Example 2, the bottle was produced in the same manner as in Example 2 using EVOH(A) alone instead of the blend of EVOH(A) and EVOH(B). The obtained bottle is not acceptable because it shows a lot of longitudinal stripes of uneven thickness and localized uneven stretching.

## Example 3

EVOH(A) containing ethylene units in an amount of 32 mole percent and having a saponification degree of 99.6 mole percent and a melt index (MI(A), at 190°C) of 1.5 g/10 minutes was found to have a solubility parameter SP(A) of 10.6 and a dynamic viscoelasticity E'(A) (at 150°C) of $3 \times 10^9$ dyn/cm². EVOH(B) containing N-vinyl-2-pyrrolidone units in an amount of 1 mole percent and ethylene units in an amount of 40 mole percent and having a saponification degree of 99.6 mole percent and a melt index (MI(B), at 190°C) of 5.0 g/10 minutes was found to have a solubility parameter SP(B) of 10.0 and a dynamic viscoelasticity E'(B) (at 150°C) of $1 \times 10^8$ dyn/cm². From these data, the difference between SP(A) and SP(B) is 0.6, and the ratio of E'(A) to E'(B) (E'(A)/E'(B)) is 30.

The blend of EVOH(A) and EVOH(B) containing 10 weight parts of EVOH(A) and 80 weight parts of EVOH(B) was pelletized and formed into a laminate sheet in the same manner as in Example 1. The structure of the laminate sheet is as follows: Two outer layers (800 μm each) made of polypropylene ("Mitsubishi Noblen MA6", a product of Mitsubishi Petrochemical Co., Ltd.), and two 50 μm adhesive layers made of a maleic anhydride modified ethylene-vinyl acetate copolyer ("Admer QF500", a product of Mitsui Petrochemical Co., Ltd.) for bonding to the two outer layers a 50 μm intermediate layer made of the above mentioned EVOH.

The tensile force of polypropylene of this sheet was 1.6 kg/15 mm width at 150°C, therefore the tensile force ratio of EVOH layer to polypropylene layer EVOH layer/polypropylene layer becomes 0.13.

This sheet was thermal drawn at 150°C by a vacuum air-pressure former (draw rate $9 \times 10^5$ percent (drawing area magnification)/minute, draw ratio 1, stretch ratio 7). The obtained cups were excellent in clarity and appearance without cracks and localized uneven stretching.

The gas barrier properties of this cup at 20°C, 65% RH were excellent. The amount of oxygen permeated (ml) per m².24hr.atm at a layer thickness of 20 μm was 0.6 and its R-value (when n = 20) was 0.2.

## Example 4

The shaped article was produced in the same manner as in Example 3, however using EVOH(A) containing ethylene units in an amount of 36 mole percent and having a saponification degree of 99.6 mole percent and a melt index (MI, at 190°C) of 1.5 g/10 minutes. EVOH(A) of this Example was found to have a solubility parameter of 10.3, and a dynamic viscoelasticity of $2 \times 10^{10}$ dyn/cm².

The obtained cup shows essentially no nonuniformity.

## Example 5

The trimming and scrap of a multilayered structure produced in Example 3 was pulverized and pelletized. The pellets were blended with polypropylene resin (MA6) in an amount of 30 weight percent, and the obtained resin blend was formed in the same manner as in Example 3. The cup was of excellent quality without cracks, nonuniformity, even though the recovered substances were blended in the polypropylene layer. The tensile force ratio of EVOH layer to polypropylene layer, EVOH layer/polypropylene layer was 0.15. The gas barrier properties of this cup were excellent. The amount of oxygen permeated (ml) per m².24hr.atm at a layer thickness of 20 μm was 0.7 and its R-value was 0.1.

## Claims

1. A resin composition comprising 95 to 30 parts by weight of a saponified ethylene-vinyl acetate copolymer (A), containing ethylene units in an amount of 20 to 55 mole percent, and having a saponification degree of the vinyl acetate component of at least 90 mole percent, and 5 to 70 parts by weight of a saponified modified ethylene-vinyl acetate copolymer (B) containing pyrrolidone ring containing units in an amount of 0.1 to 10 mole percent, and ethylene units in an amount of 20 to 55 mole percent, and having a saponification degree of the vinyl acetate component of at least 90 mole percent.

2. A resin composition according to claim 1, wherein the pyrrolidone ring containing units are units of N-vinyl-2-pyrrolidone.

3. A resin composition according to claim 1, wherein the difference between the ethylene units of (A) and (B) is at least 5 mole percent.

4. A multilayered structure comprising a layer of a resin composition comprising 95 to 30 parts by weight of a saponified ethylene-vinyl acetate copolymer (A) containing ethylene units in an amount of 20 to 55 mole percent, and having a saponification degree of the vinyl acetate component of at least 90 mole percent, and 5 to 70 parts by weight of a saponified modified ethylene-vinyl acetate copolymer (B) containing pyrrolidone ring-containing units in an amount of 0.1 to 10 mole percent, and ethylene units in an amount of 20 to 55 mole percent, and having a saponification degree of the vinyl acetate component of at least 90 mole percent, and at least one layer of a thermoplastic resin on the layer of the resin composition.

5. The use of the resin composition according to anyone of claims 1 to 3 for preparing shaped articles, in particular films and sheet material.